# EUROPEAN PATENT SPECIFICATION

(11) **EP 4 411 170 B1**
(45) Date of publication and mention of the grant of the patent: **15.04.2026**
(21) Application number: 24153926.1
(22) Date of filing: 25.01.2024
(51) Int. Cl.: F16H 1/32

(54) **SPEED REDUCER**
DREHZAHLMINDERER
RÉDUCTEUR DE VITESSE

(30) Priority: 02.02.2023 JP 2023014530; 15.12.2023 JP 2023212235
(43) Date of publication of application: 07.08.2024
(73) Proprietor: Nabtesco Corporation, Tokyo (JP)
(72) Inventor: Naruse, Takashi, Tokyo (JP); Ogawa, Masahiro, Tokyo (JP); Ukai, Yuki, Tokyo (JP); Sakakibara, Takumi, Tokyo (JP)
(74) Representative: Grünecker Patent- und Rechtsanwälte PartG mbB

(56) References cited:
- EP-A1- 4 067 697
- WO-A1-95/22017
- DE-A1- 102014 005 435
- DE-A1- 102022 115 297
- DE-T5- 112013 003 373

## Description

### TECHNICAL FIELD

The present invention relates to a speed reducer.

### BACKGROUND

Eccentrically oscillating speed reducers have been known as disclosed by, for example, Patent Literature 1. Such reducers each include a carrier, a shaft, an external gear, and a casing as main components. The shaft is rotatably held by the carrier. The external gear is supported on an eccentric member of the shaft. As the shaft rotates, the external gear oscillates eccentrically relative to the carrier. The casing has internal teeth that mesh with the external teeth of the eccentrically oscillating external gear. The number of teeth on the internal teeth of the casing is different from the number of teeth on the external teeth of the external gear. As a result, the carrier supporting the external gear via the shaft rotates relative to the casing. The rotation inputted to the shaft is outputted as the relative rotation of the carrier and casing at a reduced speed.

In the reducer described in Patent Literature 1, the eccentrically oscillating external gear is prevented from moving in the axial direction by contacting the carrier or main bearing. Thus, when the external gear oscillates eccentrically at high speeds, the external gears and carrier abrade due to friction between them.

When the external gear and carrier abrade away, a desired amount of rotation cannot be outputted with high accuracy. The amount of abrasion of two adjacent components can be affected by pressure and relative motion speed. As the pressure or relative motion speed increases, the amount of abrasion increases, and furthermore, damage such as seizure may occur. Especially for speed reducers that rotate at high speeds, the relative motion speed increases, and abrasion of components including the external gear is more increased.
DE 11 2013 003 373 T5 discloses a speed reducer according to the preamble of claim 1.

### RELEVANT REFERENCES

### LIST OF RELEVANT PATENT LITERATURE

Patent Literature 1: JPH05-180278 A

### SUMMARY

One object of the present invention is to suppress abrasion of components in the eccentric oscillating speed reducer caused by eccentric oscillation of the external gear.

This object is achieved by a speed reducer according to claim 1. Preferred embodiments are laid down in the dependent claims. Aspects of the invention relates to a speed reducer described in the following (1) to (16).

According to the invention, it is possible to suppress abrasion of components in the eccentric oscillating speed reducer caused by eccentric oscillation of the external gear.

### BRIEF DESCRIPTION OF THE DRAWINGS

Fig. 1 is a longitudinal sectional view of a speed reducer illustrating one embodiment.
Fig. 2 is a sectional view along the line II-II in Fig. 1.
Fig. 3 is a plan view of a spacer and external gear that can be included in the speed reducer of Fig. 1.}
Fig. 4 is a plan view of the spacer and external gear shown in Fig. 3 in a different relative position from that shown in Fig. 3.
Fig. 5 is a view corresponding to Fig. 4 and shows one modification example of the spacer and external gear.
Fig. 6 is a view corresponding to Fig. 2 and shows another modification example of the spacer and external gear.
Fig. 7 is an partially enlarged view of Fig. 1.
Fig. 8 is a cross-sectional view similar to Fig. 7, showing yet another modification example of the spacer and external gear.

### DESCRIPTION OF THE EMBODIMENTS

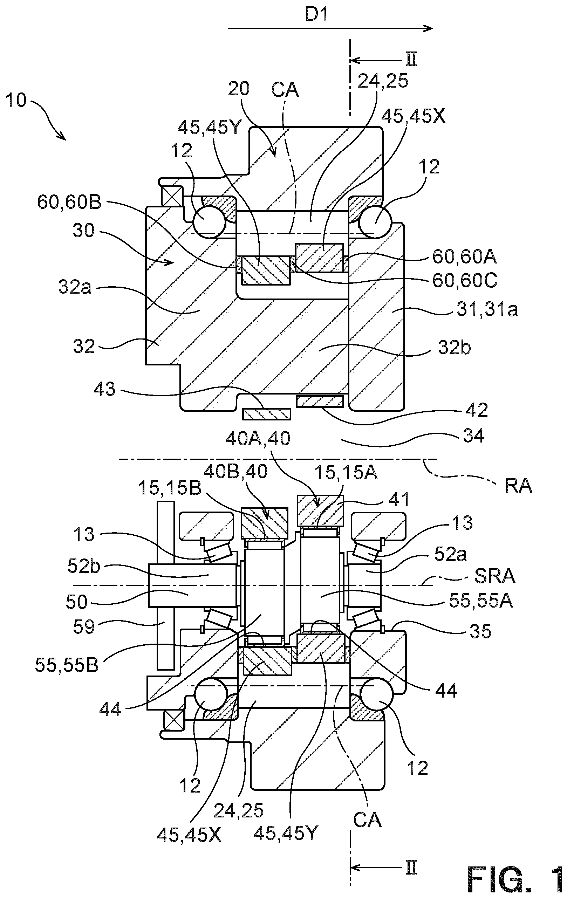

One embodiment of the invention will be hereinafter described with reference to the attached drawings. Figs. 1 to 8 are drawings for illustrating one embodiment of the invention. Components and elements shown in some drawings may be omitted in other drawings. Scale and aspect ratio may differ between the drawings.

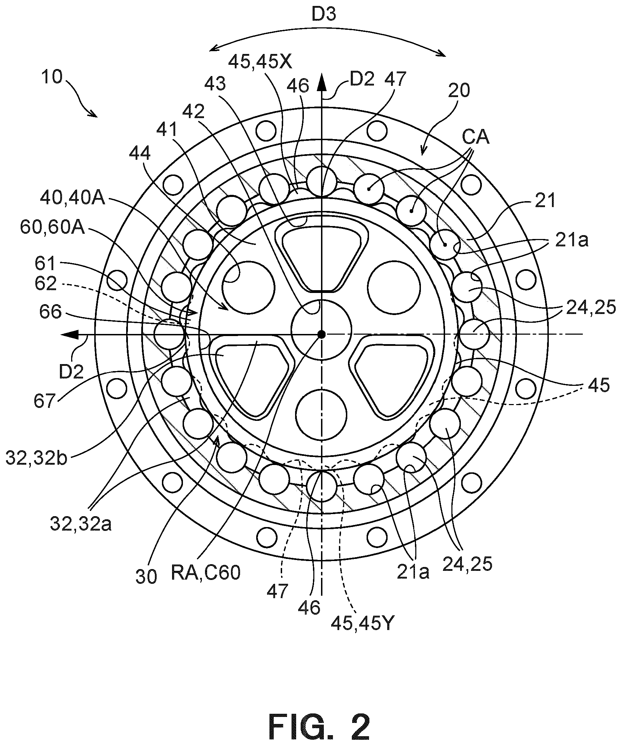

The overall configuration of a speed reducer 10 will be now described with reference to Figs. 1 and 2. The speed reducer 10 receives rotation from a motor or other drive means. The speed reducer 10 reduces the inputted rotation speed and outputs the rotation at the reduced speed. The speed reducer 10 includes a casing 20, a carrier 30, an external gear 40, and a shaft 50 as its main components. The casing 20 houses the carrier 30. Main bearings 12 are provided between the casing 20 and the carrier 30. The casing 20 and carrier 30 are rotatable relative to each other about a rotation axis RA. The reduction gear 10 reduces the input rotation and outputs it as relative rotation of the casing 20 and the carrier 30.

The direction parallel to the rotation axis RA is referred to as an axial direction D1. A circumferential direction D3, referred to later, is the direction along the circular ring centered on the rotation axis RA, as shown in Fig. 2. A radial direction D2 is perpendicular to the rotation axis RA, as shown in Fig. 1. The side closer to the rotation axis RA in the radial direction D2 is referred to as an inner side or inward, and the side away from the rotation axis RA in the radial direction D2 is referred to as an outer side or outward.

The carrier 30 holds the shaft 50 in a rotatable manner. A shaft rotation axis SRA of the shaft 50 extends parallel to the axial direction D1. The drive means inputs rotation to the shaft 50. The shaft 50 has an eccentric member 55. The eccentric member 55 is disposed off the center of rotation of the shaft 50. The shaft 50 penetrates through the external gear 40. The external gear 40 is disposed on the eccentric member 55. As the shaft member 50 rotates, the external gear 40 oscillates eccentrically. The external gear 40 has external teeth 45 that mesh with internal teeth 25 on an inner surface of the casing 20. The number of the internal teeth 25 is different from the number of the external teeth 45. When rotation is inputted to the shaft 50, the external gear 40 oscillates eccentrically as the internal teeth 25 mesh with the external teeth 45. Due to the difference in the number of teeth between the internal teeth 25 and external teeth 45, the outer gear 40 and the carrier 30 supporting the shaft member 50 rotate relative to the casing 20.

The casing 20, carrier 30, external gear 40, and shaft 50 will now be described, based on the specific configurations shown in the drawings.

The casing 20 has the internal teeth 25. The internal teeth 25 are arranged in the circumferential direction D3. The circumferential direction D3 is the direction along the circular ring centered on the rotation axis RA. In the illustrated example, the speed reducer 10 includes two external gears 40A and 40B arranged in the axial direction D1. Each internal tooth 25 are configured to extends in the axial direction D1 and meshes with the external teeth 45 of the two external gears 40A and 40B.

The casing 20 shown in the drawing includes a substantially cylindrical-shaped casing body 21 and internal tooth pins 24 held on the inner surface of the casing body 21. As shown in Fig. 2, the casing body 21 has a plurality of pin grooves 21a arranged in the circumferential direction D3. The pin grooves 21a extend in the axial direction D1 and accommodate and hold the cylindrical internal tooth pins 24. Each internal tooth pin 24 constitutes one internal tooth 25. The internal tooth pins 24 each may be rotatable within the pin grooves 21a about a central axis CA (see Fig. 1) of the internal tooth pin 24.

The carrier 30 is accommodated in the casing 20 via the pair of main bearings 12. The carrier 30 is rotatable relative to the casing about the rotation axis RA. The illustrated carrier 30 has a carrier plate 31 and carrier base 32 fixed to each other. The carrier plate 31 has a plate-shaped first carrier portion 31a. The carrier base 32 has a plate-shaped second carrier portion 32a and a column portion 32b extending from the second carrier portion 32a. The column portion 32b protrudes in the axial direction D1 from the second carrier portion 32a toward the first carrier portion 31a. The second carrier portion 32a and the column portion 32b may be integrally formed. Two or more column portions 32b are arranged at intervals in the circumferential direction D3. In the illustrated example, three column portions 32b are provided. The external gear 40 is disposed between the first carrier portion 31a and the second carrier portion 32a in the axial direction D1.

The illustrated carrier 30 has a central hole 34 and a through hole 35. The central hole 34 and through hole 35 penetrate the carrier plate 31 and carrier base 32. The central hole 34 is located on the rotation axis RA. Two or more through holes 35 are provided in the carrier 30. The two or more through holes 35 are arranged at intervals in the circumferential direction D3.

The shaft 50 is rotatably held in the carrier 30. The illustrated shaft 50 is inserted in the through hole 35 of the carrier 30. A pair of main shaft bearings 13 are provided between the carrier 30 and the shaft member 50. Via the main shaft bearings 13, the shaft 50 can rotate relative to the carrier 30 about the shaft rotation axis SRA. The shaft rotation axis SRA extends parallel to the axial direction D1. The illustrated speed reducer 10 has the two or more shafts 50 inserted in the two or more through holes 35, respectively. The two or more shafts 50 arranged at the intervals in the circumferential direction D3. In the illustrated example, three through holes 35 are provided. In the illustrated example, three shaft members 50 are provided.

The illustrated shaft 50 includes a shaft body 51 and the pair of eccentric members 55 disposed on the shaft body 51. The eccentric members 55 are cylindrical portions. The eccentric members 55 have diameters larger than that of the shaft body 51. The eccentric members 55 are eccentrically disposed from the shaft rotation axis SRA, which is the center of rotation of the shaft 50. The pair of eccentric members 55 includes a first eccentric member 55A and a second eccentric member 55B. The first eccentric member 55A and the second eccentric member 55B are offset from the shaft rotation axis SRA by the same amount of eccentricity on the opposite sides. In other words, in the section perpendicular to the axial direction D1, the center of the first eccentric member 55A and the center of the second eccentric member 55B are disposed symmetrically with respect to one point on the shaft rotation axis SRA.

The shaft body 51 includes a first bearing support portion 52a that is inserted in the first carrier portion 31a of the carrier plate 31 and a second bearing support portion 52b that is inserted in the second carrier portion 32a of the carrier base 32. The bearing support portions 52a and 52b each support the main shaft bearings 13. The pair of eccentric members 55a and 55b are disposed between the pair of bearing support portions 52a and 52b in the axial direction D1. The illustrated shaft 50 further has an input gear 59 fixed to the shaft body 51. In the illustrated example, the first bearing support portion 52a, the first eccentric member 55a, the second eccentric member 55b, the second bearing support portion 52b, and the input gear 59 are arranged in this order from a first side (right side in Fig. 1) to a second side (left side in Fig. 1) in the axial direction D1.

The illustrated speed reducer 10 has a first external gear 40A and a second external gear 40B as the external gears 40. The first external gear 40A is disposed on the first eccentric members 55A of the two or more shafts 50. The second external gear 40B is disposed on the second eccentric members 55B of the two or more shafts 50. The first external gear 40A and the second external gear 40B are disposed between the first carrier portion 31a of the carrier plate 31 and the second carrier portion 32a of the carrier base 32 in the axial direction D1. The first external gear 40A is disposed between the first carrier portion 31a and the second external gear 40B in the axial direction D1. The second external gear 40B is disposed between the first external gear 40A and the second carrier portion 32a in the axial direction D1.

The illustrated external gear 40 includes a disk-shaped central plate portion 41 and external teeth 45 arranged along the periphery of the central plate 41. The central plate portion 41 has a central hole 42 and a column through hole 43. The central hole 42 is situated on the rotation axis RA. The central hole 42 faces the central hole 34 in the axial direction D1. In the illustrated example, two or more column through holes 43 are arranged at intervals in the circumferential direction D3. The column portions 32b of the carrier 30 are inserted through the column through holes 43. In the illustrated example, three column through holes 43 are provided.

The central plate portion 41 is further provided with two or more shaft through holes 44. In the illustrated embodiment, three shaft through holes 44 are arranged at intervals in the circumferential direction D3. Each eccentric body 55 is disposed in the corresponding shaft through hole 44. A bearing 15 is provided between the eccentric member 55 and the external gear 40. The first external gear 40A is supported on the first eccentric member 55A of the shaft 50 via a first bearing 15A. The second external gear 40B is supported on the second eccentric member 55B of the shaft 50 via a second bearing 15B.

Each external gear 40 is supported on the corresponding one of the eccentric members 55. Rotational phases of the eccentric members 55 of the two or more shafts 50 can be synchronized. Therefore, as the shafts 50 rotate, the external gears 40 oscillate eccentrically. In other words, as the two or more shafts 50 rotate, the external gears 40 translate and move along a circumferential path around the rotation axis RA. The first external gear 40A and the second external gear 40B rotate shifted by half a cycle in phase from each other.

Rotation is inputted to the above speed reducer 10 from a drive means such as a motor. For example, an output gear of the drive means is disposed on the rotation axis RA and meshes with the input gears 59 of the two or more shafts 50. When the output gear rotates, the shafts 50 rotate and the external gears 40 oscillate eccentrically. At this time, the external teeth 45 of the external gears 40 mesh with the internal teeth 25 of the casing 20. Due to the difference in the number between the external teeth 45 and the internal teeth 25, the carrier 30, which supports the external gears 40 via the shafts 50, and the casing 20 rotate relatively about the rotation axis RA. When the casing 20 is fixed, the rotation of the carrier 30 is outputted. Whereas when the carrier 30 is fixed, the rotation of the casing 20 is outputted.

When the speed reducer 10 operates, the external gears 40 oscillate eccentrically between the first carrier portion 31a and the second carrier portion 32a of the carrier 30. The external gears 40 are prevented from moving in the axial direction D1 by contacting the carrier 30 or the main bearings 12, and are retained on the eccentric members 55. The period of eccentric oscillation of the external gears 40 is the same as the rotation period of the shafts 50. Thus, the external gears 40 oscillates eccentrically at a high speed.

In conventional eccentric oscillating speed reducers, friction occur between the external gear and carrier due to the movement of the external gear relative to the carrier caused by eccentric oscillation of the external gear. The friction can cause abrasion of the external gears and carrier. As the external gears and carrier wear, the play or gap between the components of the speed reducer increases, making it difficult to precisely output a desired amount of rotation from the speed reducer. It is known that the amount of abrasion of two adjacent components is affected by pressure and relative motion speed between them. As the pressure or relative motion speed increases, the amount of abrasion increases, and furthermore, damage such as seizure may occur. Especially for speed reducers that rotate at high speeds, the relative motion speed increases, and abrasion of components including the external gear is more increased. To reduce the abrasion, it is effective to reduce the relative motion speed. It is also effective to reduce the pressure to reduce the abrasion.

To address this, the speed reducer of the embodiment includes annular spacers 60 disposed between the external gears 40 and the carrier 30. The spacers 60 can rotate while contacting the external gears 40 and carrier 30. With such spacers 60, abrasion of the external gears 40 and carrier 30, as well as abrasion of the spacers 60, can be effectively suppressed. The spacer 60 will now be described based on one specific example and modification example. In the following different configuration examples, corresponding components, members, parts, etc. will be given the same numerals, and those descriptions will be omitted.

The spacer 60 described below is applicable to the above-mentioned speed reducer 10 described with reference to the specific examples shown in Figs. 1 and 2. The application of the spacer 60 is not limited to the specific examples shown in Figs. 1 and 2.

Figs. 1 to 6 show one specific example and modification example of the speed reducer 10 that includes the spacers 60. The speed reducer 10 includes the carrier 30, the shafts 50 rotatably supported by the carrier 30, and the external gears 40 that are supported by the shafts 50 and eccentrically oscillate relative to the carrier 30 by rotation of the shafts 50. The illustrated speed reducer 10 includes the casing 20 having the internal teeth 25 that mesh with the external teeth 45 of the external gears 40. The casing 20 rotatably supports the carrier 30. In the illustrated speed reducer 10, the spacers 60 include a first spacer 60A and a second spacer 60B. The first spacer 60A is disposed between the first carrier portion 31a and the first external gear 40A in the axial direction D1. The first spacer 60A is rotatable while contacting the first carrier portion 31a and the first external gear 40A. The second spacer 60B is disposed between the second carrier portion 32a and the second external gear 40B in the axial direction D1. The second spacer 60B is rotatable while contacting the second carrier portion 32a and the second external gear 40B.

It is known that the amount of abrasion of two adjacent components is affected by pressure or relative motion speed between them. By providing the spacers 60, the relative motion of the carrier 30 and external gears 40 without any spacers 60 can be distributed between the relative motion between the external gears 40 and the spacers 60 and the relative motion between the spacers 60 and the carrier 30. The rotation of the spacers 60 can reduce the relative motion speed of the carrier 30 with respect to the spacers 60 and the relative motion speed of the external gears 40 with respect to the spacers 60, compared to the relative motion speed of the carrier 30 and external gear 40 in the casing where the spacers 60 are not provided. Since the spacer 60 is formed in an annular shape, the contact area of the carrier 30 and the spacer 60 can be secured. Moreover, the annular shape of the spacer 60 can realize a smooth relative motion of the spacer 60 with respect to the carrier 30. Thus, it is possible to reduce the pressure between the two adjacent components.

As described above, by providing the spacers 60, the relative motion speed and pressure can be reduced. As a result, the spacers 60 can effectively suppress abrasion of the components of the speed reducer 10, such as the carrier 30 and the external gears 40. By suppressing abrasion, it is possible to precisely output the desired amount of rotation from the speed reducer 10 over a long period of time. The life of the speed reducer 10 can be extended and the reliability of the speed reducer 10 can be improved.

In the illustrated example, the spacers 60 include the first spacer 60A and the second spacer 60B. The first spacer 60A disposed between the first carrier portion 31a and the first external gear 40A in the axial direction D1 rotates while contacting the first carrier portion 31a and the first external gear 40A. This configuration makes it possible to reduce the total amount of abrasion of the first carrier portion 31a, the first external gear 40A and the first spacer 60A when the first spacer 60A is provided, compared to the total amount of abrasion of the first carrier portion 31a and the first external gear 40A when the first spacer 60A is not provided. The second spacer 60B disposed between the second carrier portion 32a and the second external gear 40B in the axial direction D1 rotates while contacting the second carrier portion 32a and the second external gear 40B. This configuration makes it possible to reduce the total amount of abrasion of the second carrier portion 32a, the second external gear 40B and the second spacer 60B when the second spacer 60B is provided, compared to the total amount of abrasion of the second carrier portion 32a and the second external gear 40B when the second spacer 60B is not provided. In this way, the abrasion of the first carrier portion 31a, the first spacer 60A, the first external gear 40A, the second external gear 40B, the second spacer 60B, and the second carrier portion 32a can be reduced.

The speed reducer 10 of Fig. 1 includes an annular intermediate spacer 60C disposed between the first external gear 40A and second external gear 40B. The intermediate spacer 60C can rotate while contacting the first external gear 40A and the second external gear 40B. The intermediate spacer 60C can function in the same manner as the first spacer 60A and the second spacer 60B. In other words, the total amount of abrasion of the first external gear 40A, the intermediate spacer 60C, and the second external gear 40B when the intermediate spacer 60C is provided can be made smaller than the total amount of abrasion of the first external gear 40A and the second external gear 40B when the intermediate spacer 60C is not provided. In this way, the abrasion of the first external gear 40A, the intermediate spacer 60C, and the second external gear 40B can be reduced.

When referring to as the "spacer 60" without distinguishing between the first spacer 60A, second spacer 60B, and intermediate spacer 60C, the description regarding the "spacer 60" can be applied to any of first spacer 60A, second spacer 60B, and intermediate spacer 60C. Similarly, the description regarding the "external gear 40" can be applied to both the first external gear 40A and the second external gear 40B. The description of the "eccentric member 55" is applicable to both the first eccentric member 55A and the second eccentric member 55B. The description of the "bearing 15" is applicable to both the first bearing 15A and the second bearing 15B.

As can be clearly seen in Fig. 2, the spacer 60 can rotate while contacting the internal teeth 25 from the inner side in the radial direction. By contacting the internal teeth 25 of the casing 20, the spacer 60 is prevented from moving outward in the radial direction D2. The spacers 60 on the internal teeth 25 can rotate smoothly. The spacer 60 can rotate more smoothly on the internal tooth 25 when the internal tooth pin 24, which constitutes the internal tooth 25, is rotatable in the pin groove 21a. Since the spacer 60 is smoothly rotatable, it is possible to more effectively reduce the relative motion speed and pressure between the spacer 60 and the components adjacent to the spacer 60. Therefore it is possible to more effectively reduce abrasion of the components of the speed reducer 10, such as the carrier 30, the external gears 40, and the spacers 60.

The spacer 60 has an inner peripheral edge 66 and an outer peripheral edge 67. The center of the outer peripheral edge 67 may be situated on the rotation axis RA. Here, the "center" means the center of gravity of the shape enclosed by the contour of the subject when viewed from the axial direction D1, in other words, in projection onto a plane perpendicular to the axial direction D1. In other words, the center of the outer peripheral edge 67 means the center of gravity of the shape enclosed by the outer peripheral edge 67. As an example, when the outer edge 67 has a circular shape when viewed from the axial direction D1, the center of the outer peripheral edge 67 coincides with the center of the circular shape. According to this configuration, the spacers help uniform application of pressure to the components. Thus, it is possible to more effectively reduce the relative motion speed and pressure between the spacer 60 and the component adjacent to the spacer 60. As a result, abrasion of the spacer 60 and the components adjacent to the spacer 60 can be more effectively reduced.

The spacer 60 may be rotatable about the rotation axis RA. According to this configuration, the spacer 60 can easily rotate with the eccentric oscillation of the external gear 40. Thus, it is possible to more effectively reduce the relative motion speed and pressure between the spacer 60 and the components adjacent to the spacer 60. As a result, abrasion of the spacer 60 and the components adjacent to the spacer 60 can be more effectively reduced.

In the illustrated example, the spacer 60 has an annular shape. The spacer 60 is formed in a plate shape and has a first surface 61 and a second surface 62 that can surface contact adjacent components. As shown in Fig. 2, the inner peripheral edge 66 is circular. The outer peripheral edge 67 is also circular. The center of the inner peripheral edge 66 and the center of the outer peripheral edge 67 may coincide. In other words, the inner and outer peripheral edge 66 and 67 may be concentric to each other. The outer peripheral edge 67 may internally contact the internal teeth 25 of the casing 20. That is, the outer peripheral edge 67 may have the same diameter as the circle contacting the internal teeth 25 of the casing 20 on the inner side. Alternatively, the outer peripheral edge 67 may have a diameter that is slightly smaller than the diameter of the circle contacting the internal teeth 25 of the casing 20 on the inner side. In such an example, the center of the outer peripheral edge 67 of the spacer 60 may be situated on the rotation axis RA. The spacer 60 is rotatable about the rotation axis RA. As a result, abrasion of the spacer 60 and components adjacent to the spacer 60 can be more effectively reduced.

As shown in Fig. 2, the annular spacer 60 may contact the eccentrically oscillating external gear 40 in an annular area. In this example, a larger contact area can be secured between the spacer 60 and the external gear 40. It is also possible to stably hold the spacer 60 in an orientation orthogonal to the axial direction D1. Thus, it is possible to more effectively reduce the relative motion speed and pressure between the spacer 60 and the components adjacent to the spacer 60. As a result, abrasion of the spacer 60 and the components adjacent to the spacer 60 can be more effectively reduced.

As shown in Fig. 2, the external gear 40 disposed eccentrically from the rotation axis RA. In other words, at any given timing, the distance from the rotation axis RA to a tip 46 or bottom 47 of each external tooth 45 of the external gear 40 is not constant when viewed from the axial direction D1. The distance from the rotation axis RA to the tooth tip 46 or bottom 47 of each external tooth 45 of the external gear 40 varies. Whereas the spacer 60 is formed in the annular shape whose center C60 is situated on the rotation axis RA. In this example, in any state, the annular spacer 60 contacts the eccentrically oscillating external gear 40 in the annular region. That is, the annular spacer 60 may always be in contact with the eccentrically oscillating external gear 40 in the annular region.

The tooth tip 46 refers to the portion of the tooth that is farthest outward in the radial direction from the central plate portion 41. Generally, the tooth tip 46 appears at the position corresponding to the center of the external tooth 45 in the circumferential direction. The tooth bottom 47 refers to the portion of the tooth that is closest to the central plate portion 41 in the radial direction. The tooth bottom 47 is the portion that is closest to the two circumferentially adjacent external teeth.

The first spacer 60A and the second spacer 60B may contact the carrier 30 in the annular region. With this configuration, a large contact area between the carrier 30 and the first and second spacers 60A, 60B can be secured. It is also possible to stably hold the first spacer 60A and the second spacer 60B in an orientation orthogonal to the axial direction D1. Thus, the pressure between the carrier 30 and the first and second spacers 60A, 60B, and abrasion of the first spacer 60A, the second spacer 60B, and the carrier 30 can be more effectively suppressed.

When the first spacer 60A and the second spacer 60B rotate about the rotation axis RA relative to the carrier 30, as in the illustrated example, the annular first spacer 60A and the annular second spacer 60B can contact a certain area of the carrier 30. In other words, at any given time, the first spacer 60A and the second spacer 60B can contact the carrier 30 in the annular region.

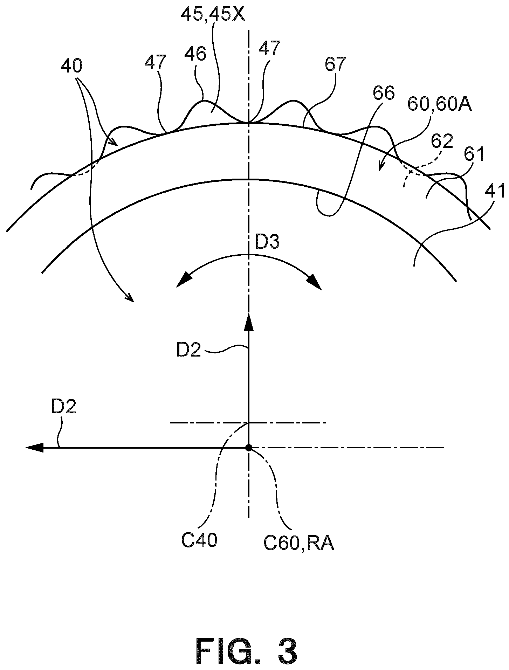

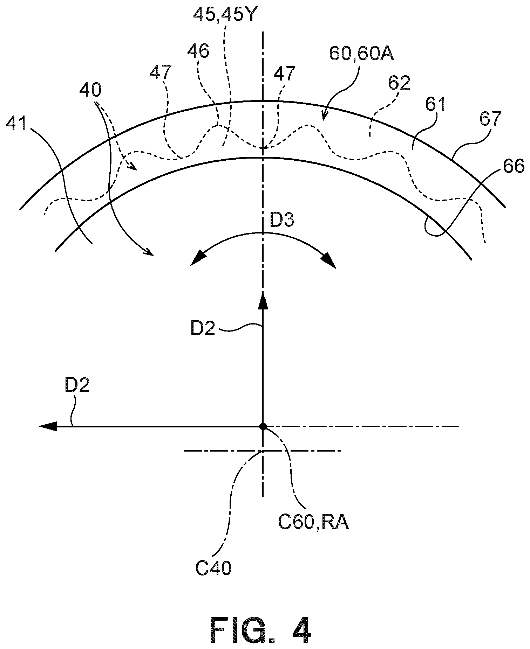

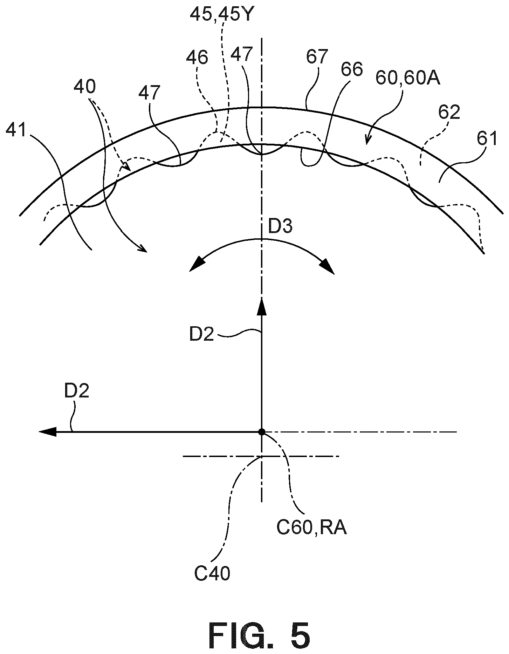

The external gear 40 oscillates eccentrically. Therefore, each external tooth 45 of the external gear 40 changes its position relative to the spacer 60. Figs 3 to 5 illustrate the positional relationship between the spacer 60 and the external gear 40 in the radial direction D2. Figs. 3 to 5 show the spacer 60 and the external gear 40 observed from the axial direction D1. Fig. 3 shows, together with the spacer 60, an external tooth 45X, which is moved to the outermost position in the radial direction D2 by the eccentric oscillation of the external gear 40. Figs. 4 and 5 show, together with the spacer 60, an external tooth 45Y, which is moved to the innermost position in the radial direction D2 by the eccentric oscillation of the external gear 40. In the examples shown in Figs. 3 to 5, the spacer 60 is formed in the annular shape. The center C60 of the spacer 60 coincides with the center of the inner peripheral edge 66 and the center of the outer peripheral edge 67. The center C60 of the spacer 60 is situated on the rotation axis RA. Figs. 3 to 5 also show a center C40 of the external gear 40. The center C40 of the external gear 40 coincides with the center of gravity of the central plate portion 41, which is disk-shaped.

In the example of Fig. 3, when the tooth tip 46 of the external tooth 45X has moved to the outermost position in the radial direction D2, the tip is situated on the outer side of the outer peripheral edge 67 of the spacer 60 in the radial direction D2. In the example of Fig. 4, when the tooth tip 46 of the external tooth 45Y has moved to the innermost position in the radial direction D2, the tip is situated on the inner side of the outer peripheral edge 67 of the spacer 60 in the radial direction D2. In this example, the tips 46 of the external teeth 45 included in the external gear 40 can move beyond the outer peripheral edge 67 of the spacer 60 by the eccentric oscillation of the external gear 40. In this example, as shown in Fig. 2, some of the tooth tips 46 of the external teeth 45 are situated on the outer side of the outer peripheral edge 67 of the spacer 60 in the radial direction D2, and the remaining tooth tips 46 of the external teeth 45 are situated on the inner side of the outer peripheral edge 67 of the spacer 60 in the radial direction D2.

The following advantageous effects can be expected when the tooth tips 46 of the external teeth 45 included in the external gear 40 move across the outer peripheral edge 67 of the spacer 60 as the external gear 40 oscillates eccentrically.

First, as shown in Fig. 4, when some tooth tips 46 of the external teeth 45 are situated on the inner side of the outer peripheral edge 67 in the radial direction D2, the surfaces 61, 62 (in the example of Fig. 4, the second surface 62) facing the external gear 40 of the spacer 60 are at least partially uncovered by the external gear 40 and exposed. This enhances supply of lubricant to the surfaces 61, 62 (in the example of Fig. 4, the second surface 62) of the spacer 60 facing the external gear 40, thereby effectively suppressing abrasion of the spacer 60 and the external gear 40.

The rotation of the spacer 60 relative to the external gear 40 is promoted by the spacer 60 contacting and being rubbed against the outer peripheral edge of the external gear 40, which includes the tooth tips 46 of the external teeth 45. The motion speed of the external gear 40 in the circumferential direction D3 is the largest at its outermost circumferential edge in the radial direction D2, and the circumferential length of the external gear 40 in the circumferential direction D3 is the longest at its outermost circumferential edge in the radial direction D2. Therefore, by providing the spacer 60, a high relative motion speed between the external gear 40 and the carrier 30 can be distributed. In addition, the pressure can be reduced by increasing the contact area between the spacer 60 and the external gear 40 and carrier 30. Thus, it is possible to reduce the pressure and relative motion speed.

As a result of the above, the relative motion speed and pressure between the spacer 60 and the external gear 40 adjacent to the spacer 60 can be reduced, and abrasion of the spacer 60 and external gear 40 can be more effectively reduced.

As shown in Figs. 4 and 2, the tooth tips 46 of all the external teeth 45 of the external gear 40 may be situated on the outer side of the inner peripheral edge 66 of the spacer 60 in the radial direction D2. In this example, a larger contact area can be secured between the spacer 60 and the external gear 40. It is also possible to stably hold the spacer 60 in an orientation orthogonal to the axial direction D1. Thus, it is possible to more effectively reduce the relative motion speed and pressure between the spacer 60 and the components adjacent to the spacer 60. In this way, abrasion of the spacer 60 and components adjacent to the spacer 60 can be more effectively reduced.

Furthermore, as shown in Fig. 4, the tooth bottom 47 of the external gear 45Y, which has moved to the innermost position in the radial direction D2, may be situated on the outer side of the inner peripheral edge 66 of the spacer 60 in the radial direction D2. In this example, the spacer 60 and the external gear 40 contact each other in the annular region, and a large contact area between the spacer 60 and the external gear 40 can be secured. It is also possible to stably hold the spacer 60 in the orientation orthogonal to the axial direction D1. Thus, it is possible to more effectively reduce the pressure between the spacer 60 and the components adjacent to the spacer 60. As a result, abrasion of the spacer 60 and components adjacent to the spacer 60 can be more effectively reduced.

Unlike the example shown in Fig. 4, the tooth bottom 47 of the external tooth 45Y, which has moved to the innermost possible position in the radial direction D2, may be situated on the inner side of the inner peripheral edge 66 of the spacer 60 in the radial direction D2 as shown in Fig. 5. In the example of Fig. 3, when the tooth bottom 47 of the external tooth 45Y has moved to the outermost possible position in the radial direction D2, the tooth bottom is situated on the outer side of the inner peripheral edge 66 of the spacer 60 in the radial direction D2. In the examples of Figs. 3 and 5, the tooth bottoms 47 of the external teeth 45 included in the external gear 40 can move beyond the inner peripheral edge 66 of the spacer 60 by the eccentric oscillation of the external gear 40. In these examples, some of the tooth bottoms 47 of the external teeth 45 are situated on the outer side of the outer peripheral edge 66 of the spacer 60 in the radial direction D2, and the remaining tooth bottoms 47 of the external teeth 45 are situated on the outer side of the inner peripheral edge 66 of the spacer 60 in the radial direction D2.

The following advantageous effects can be expected when the tooth bottoms 47 of the external teeth 45 included in the external gear 40 move across the inner peripheral edge 66 of the spacer 60 as the external gear 40 oscillates eccentrically.

First, when some tooth bottoms 47 of the external tooth 45 are situated on the inner side of the inner peripheral edge 66 in the radial direction D2, the surfaces 61, 62 (in the example of Fig. 5, the second surface 62) facing the external gear 40 of the spacer 60 are at least partially uncovered by the external gear 40 and exposed. This enhances supply of lubricant to the surfaces 61, 62 (in the example of Fig. 5, the second surface 62) of the spacer 60 facing the external gear 40, thereby effectively suppressing abrasion of the spacer 60 and the external gear 40.

As a result, the relative motion speed and pressure between the spacer 60 and the external gear 40 adjacent to the spacer 60 can be reduced, and abrasion of the spacer 60, external gear 40, and carrier 30 can be more effectively reduced.

As described above, the external gear 40 is provided with the column through hole 43 through which the column portion 32b of the carrier 30 passes. In the example of Fig. 2, the column through holes 43 are situated on the inner side of the outer peripheral edge 66 of the spacer 60 in the radial direction D2. In this example, a larger contact area can be secured between the spacer 60 and the external gear 40. As a result, the relative motion speed and pressure between the spacer 60 and the external gear 40 adjacent to the spacer 60 can be reduced, and abrasion of the spacer 60 and external gear 40 can be more effectively reduced.

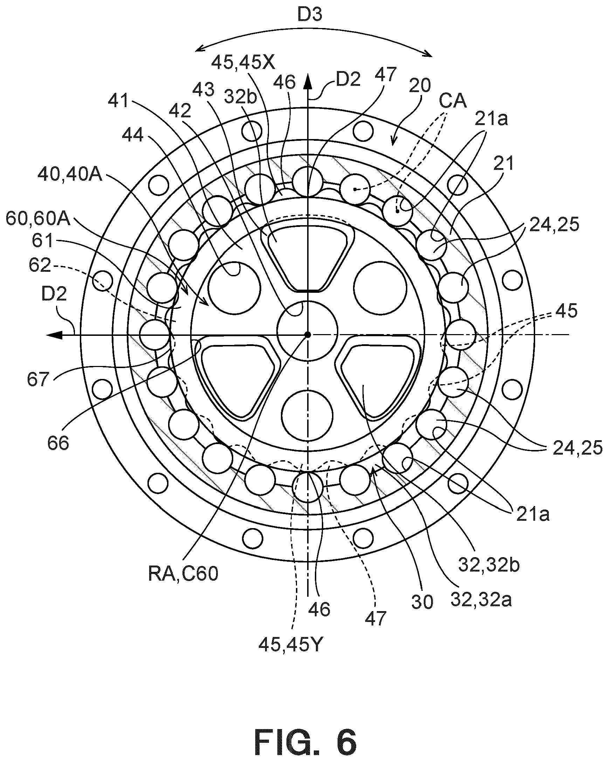

In the example of Fig. 2, the inner peripheral edge 66 of the spacer 60 is always situated on the outer side from the outermost position of the column through hole 43 in the radial direction D2. According to this example, contact between the spacer 60 and the column portion 32b can be reliably avoided. However, unlike the example of Fig. 2, the outermost position of the column through hole 43 in the radial direction D2 may move beyond the inner peripheral edge 66 of the spacer 60 due to the eccentric oscillation of the external gear 40, as shown in Fig. 6. In this example, the surfaces 61, 62 (in the example of Fig. 6, the second surface 62) of the spacer 60 facing the external gear 40 are exposed in the column through hole 43 as the external gear 40 oscillates eccentrically. This enhances supply of lubricant to the surfaces 61, 62 (in the example of Fig. 6, the second surface 62) of the spacer 60 facing the external gear 40, thereby effectively suppressing abrasion of the spacer 60 and the external gear 40.

The column portions 32b of the carrier 30 pass through the column through holes 43 of the external gear 40. In the example of Fig. 6, the column portions 32b are situated on the inner side of the inner peripheral edge 66 of the spacer 60 in the radial direction D2. This avoids contact between the column portions 32b and the spacer 60. In the illustrated example, the spacer 60 is centered on the rotation axis RA, while movement of the spacer 60 in the radial direction D2 is restricted by contacting the internal teeth 25 of the casing 20. Therefore, the carrier 30 having column portions 32b and the spacer 60 substantially do not move relative to each other in the radial direction D2. Therefore, contact between the column portions 32b and the spacer 60 can be reliably avoided.

In the speed reducer 10 of Fig. 1, the external gear 40 includes the first external gear 40A and second external gear 40B. The first external gear 40A and second external gear 40B are disposed in the axial direction D1. The speed reducer 10 includes the annular spacers 60A, 60B disposed between the carrier 30 and the external gears 40, and the intermediate spacer 60C disposed between the first external gear 40A and the second external gear 40B.

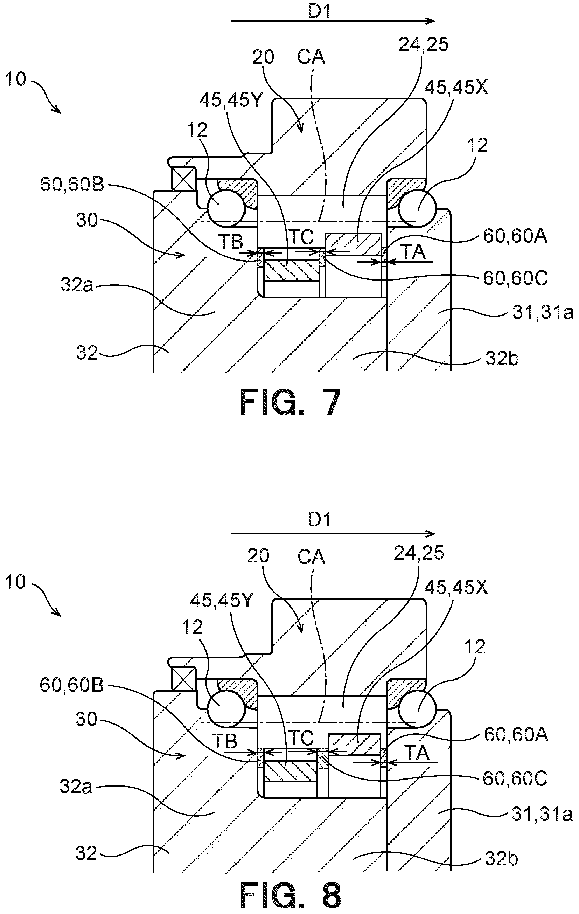

The spacer 60 does not move largely relative to the carrier 30 in the radial direction D2. The external gear 40 moves relative to the carrier 30 and spacer 60 in the axial direction D1. Therefore, as shown in Figs. 7 and 8, the contact area between the carrier 30 and the spacers 60A, 60B can be relatively increased. The contact area between the carrier 30 and the spacers 60 is relatively small. As shown in Figs. 7 and 8, the contact area between the carrier 30 and the spacers 60 is smallest in the region where the phase difference in the eccentric oscillation of the first external gear 40A and the second external gear 40B is large (typically, 180 degrees out of phase).

As shown in Figs. 7 and 8, the spacers 60A, 60B can contact the carrier 30 from one side in the axial direction D1 with a relatively large contact area. The spacers 60A, 60B can be stably supported by the carrier 30 from one side in the axial direction D1. Therefore, the spacers 60A, 60B can stably maintain their posture even when thrust forces (forces in the axial direction D1) from the external gears 40 are applied to some areas of the spacers.

On the other hand, as shown in Figs. 7 and 8, the contact area between the intermediate spacer 60C and the first external gear 40A and the contact area between the intermediate spacer 60C and the second external gear 40B may shift in the radial direction D2. Moreover, the contact area between the intermediate spacer 60C and the external gears 40A, 40B is originally small. Thus, the intermediate spacer 60C is more easily deformed than the first spacer 60A and the second spacer 60B by the thrust force from the external gear 40. In particular, the intermediate spacer 60C can be locally deformed in the region where the phases of the eccentric oscillation of the first and second external gears 40A and 40B are greatly shifted.

In terms of suppressing deformation of the intermediate spacer 60C, it is effective to increase the thickness TC of the intermediate spacer 60C. As shown in Figs. 7 and 8, the thickness TC of the intermediate spacer 60C may be greater than or equal to the thickness TA of the first spacer 60A, and the thickness TC of the intermediate spacer 60C may be greater than or equal to the thickness TB of the second spacer 60B. As shown in Fig. 8, the thickness TC of the intermediate spacer 60C may be greater than the thickness TA of the first spacer 60A and the thickness TC of the intermediate spacer 60C may be greater than the thickness TB of the second spacer 60B. The thickness of the spacer 60 is herein defined as the length along the axial direction D1 of the spacer 60.

By increasing the thickness TC of the intermediate spacer 60C as described above, deformation of the intermediate spacer 60C can be prevented. This allows the intermediate spacer 60C and the external gear 40 to be kept in surface contact each other, and the contact area between the intermediate spacer 60C and the external gear 40 can be secured. In addition, the posture of the intermediate spacer 60C can be maintained more stably such that the intermediate spacer 60C extends on a plane orthogonal to the axial direction D1. This configuration can suppress abrasion of the intermediate spacer 60C.

Furthermore, by increasing the thickness TC of the intermediate spacer 60C, the following advantageous effects can also be obtained. By increasing the thickness TC of the intermediate spacer 60C, deformation of the intermediate spacer 60C can be suppressed, as described above. By suppressing the deformation of the intermediate spacer 60C, the generation of abnormal noise caused by local contact between the intermediate spacer 60C and the external gear 40 can be suppressed.

In the one embodiment described above, the speed reducer 10 includes the carrier 30, the shaft 50 rotatably supported by the carrier 30, the external gear 40 supported by the shafts 50 and eccentrically oscillating with respect to the carrier 30 by rotation of the shaft 50, and the annular spacer 60 situated between the external gear 40 and carrier 30. The spacer 60 rotates while contacting the external gear 40 and carrier 30. With the spacer 60, the relative motion of the carrier 30 and the external gear 40 can be distributed between the relative motion of the external gear 40 and the carrier 30 and the relative motion of the carrier 30 and the spacer 60. This reduces the relative motion speed between the two adjacent components, effectively suppressing abrasion of the components of the speed reducer 10, such as the carrier 30 and the external gear 40.

While the embodiment has been described with reference to the specific and modification examples, these examples are not intended to limit the embodiment. The foregoing embodiment can be implemented in various other specific forms and is susceptible to omission, replacement, and modification of various elements thereof within the purport of the invention.

For example, we have shown the example in which the object of application of the spacer 60 is the speed reducer having the two or more shafts 50, but the application is not limited to this example. The spacer 60 may be applied to a speed reducer having only one shaft 50 disposed on the rotation axis RA.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention, which is defined by the appended claims.

## Claims

1. A speed reducer (10) comprising
a carrier (30);
a shaft (50) rotatably supported by the carrier (30);
an extemal gear (40, 40A, 40B) supported by the shaft (50), the extemal gear (40, 40A, 40B) eccentrically oscillating with respect to the carrier (30) by rotation of the shaft (50); and
a casing (20) having internal teeth (25) that mesh with external teeth (45) of the eccentrically oscillating external gear (40, 40A, 40B), **characterized by** that the speed reducer (10) further comprising
an annular spacer (60, 60A, 60B) disposed between the external gear (40, 40A, 40B) and the carrier (30), the spacer (60, 60A, 60B) rotating while contacting the external gear (40, 40A, 40B) and the carrier (30),
wherein the spacer (60, 60A, 60B) rotates while contacting the intemal teeth (25) from an inner side in a radial direction (D2).

2. The speed reducer (10) of claim 1, wherein the spacer (60, 60A, 60B) contacts the external gear (40, 40A, 40B) in an annular region.

3. The speed reducer (10) of claim 1 or 2, wherein tooth tips (46) of the external teeth (45) included in the external gear (40, 40A, 40B) move beyond an outer peripheral edge (67) of the spacer (60, 60A, 60B) by eccentric oscillation of the external gear (40, 40A, 40B).

4. The speed reducer (10) of any one of claims 1 to 3, wherein tooth tips (46) of all the external teeth (45) included in the external gear (40, 40A, 40B) are situated on an outer side of an inner peripheral edge (66) of the spacer (60, 60A, 60B) in the radial direction (D2).

5. The speed reducer (10) of any one of claims 1 to 4, wherein tooth bottoms (47) of all the external teeth (45) included in the external gear (40, 40A, 40B) are situated on an outer side of an inner peripheral edge (66) of the spacer (60) in the radial direction (D2).

6. The speed reducer (10) of any one of claims 1 to 5, wherein tooth bottoms (47) of the external teeth (45) included in the external gear (40, 40A, 40B) move beyond an inner peripheral edge (66) of the spacer (60, 60A, 60B) by eccentric oscillation of the external gear (40, 40A, 40B).

7. The speed reducer (10) of any one of claims 1 to 6, wherein the external gear (40, 40A, 40B) is provided with a column through hole (43) through which a column portion (32b) of the carrier (30) passes, and
wherein an outermost position of the column through hole (43) in a radial direction (D2) move beyond an inner peripheral edge (66) of the spacer (60, 60A, 60B) by eccentric oscillation of the external gear (40, 40A, 40B), and/or
wherein an inner peripheral edge (66) of the spacer (60, 60A, 60B) is configured to be always situated on an outer side from an outermost position of the column through hole (43) in the radial direction (D2).

8. The speed reducer (10) of any one of claims 1 to 7, wherein the spacer (60, 60A, 60B) contacts the carrier (30) in an annular region.

9. The speed reducer (10) of any one of claims 1 to 8, wherein the casing (20) rotatably supports the carrier (30),
wherein a center (C60) of an outer peripheral edge (67) of the spacer (60, 60A, 60B) is situated on an axis (RA) of relative rotation between the carrier (30) and the casing (20).

10. The speed reducer (10) of any one of claims 1 to 9, wherein the casing (20) rotatably supports the carrier (30), and
wherein the spacer (60, 60A, 60B) is rotatable about an axis (RA) of relative rotation between the carrier (30) and the casing (20).

11. The speed reducer (10) of any one of claims 1 to 10, wherein the external gear (40, 40A, 40B) includes a first external gear (40A) and a second external gear (40B),
wherein an intermediate spacer (60C) is provided between the first external gear (40A) and the second external gear (40B), and
wherein a thickness (TC) of the intermediate spacer (60C) is greater than or equal to a thickness (TA, TB) of the annular spacer (60A, 60B).

12. The speed reducer (10) of any one of claims 1 to 10, wherein the carrier (30) has a first carrier portion (31a) and a second carrier portion (31b) arranged in an axial direction (D1),
wherein the external gear (40) includes a first external gear (40A) and a second external gear (40B) disposed between the first carrier portion (31a) and the second carrier portion (31b) in the axial direction (D1), and
wherein the spacer (60) includes a first spacer (60A) disposed between the first carrier portion (31a) and the first external gear (40A) and a second spacer (60B) disposed between the second external gear (40B) and the second carrier portion (31b).

13. The speed reducer (10) of claim 12, further comprising an annular intermediate spacer (60C) disposed between the first external gear (40A) and the second external gear (40B), the intermediate spacer (60C) rotating while contacting the first external gear (40A) and the second external gear (40B).

## Patentansprüche

1. Ein Drehzahlminderer (10), umfassend
einen Träger (30);
eine Welle (50), die drehbar vom Träger (30) gelagert ist;
einem von der Welle (50) gelagerten Außenzahnrad (40, 40A, 40B), wobei das Außenzahnrad (40, 40A, 40B) durch Drehung der Welle (50) exzentrisch in Bezug auf den Träger (30) oszilliert; und
ein Gehäuse (20) mit Innenzähnen (25), die mit Außenzähnen (45) des exzentrisch oszillierenden Außenzahnrads (40, 40A, 40B) in Eingriff stehen, **dadurch gekennzeichnet, dass** der Drehzahlminderer (10) ferner umfasst
einen ringförmigen Abstandshalter (60, 60A, 60B), der zwischen dem Außenzahnrad (40, 40A, 40B) und dem Träger (30) angeordnet ist, wobei sich der Abstandshalter (60, 60A, 60B) dreht, während er das Außenzahnrad (40, 40A, 40B) und dem Träger (30) kontaktiert,
wobei sich der Abstandhalter (60, 60A, 60B) dreht, während er die Innenzähne (25) von einer Innenseite in einer radialen Richtung (D2) kontaktiert.

2. Der Drehzahlminderer (10) nach Anspruch 1, wobei der Abstandhalter (60, 60A, 60B) das Außenzahnrad (40, 40A, 40B) in einem ringförmigen Bereich kontaktiert.

3. Der Drehzahlminderer (10) nach Anspruch 1 oder 2, wobei sich die Zahnspitzen (46) der im Außenzahnrad (40, 40A, 40B) enthaltenen Außenzähne (45) durch exzentrische Oszillation des Außenzahnrads (40, 40A, 40B) über eine Außenperipheriekante (67) des Abstandhalters (60, 60A, 60B) hinausbewegen.

4. Der Drehzahlminderer (10) nach einem der Ansprüche 1 bis 3, wobei die Zahnspitzen (46) aller im Außenzahnrad (40, 40A, 40B) enthaltenen Außenzähne (45) in radialer Richtung (D2) auf einer Außenseite einer Innenperipheriekante (66) des Abstandhalters (60, 60A, 60B) angeordnet sind.

5. Der Drehzahlminderer (10) nach einem der Ansprüche 1 bis 4, wobei die Zahnfüße (47) aller im Außenzahnrad (40, 40A, 40B) enthaltenen Außenzähne (45) auf einer Außenseite einer Innenperipheriekante (66) des Abstandhalters (60) in radialer Richtung (D2) angeordnet sind.

6. Der Drehzahlminderer (10) nach einem der Ansprüche 1 bis 5, wobei sich die Zahnfüße (47) der im Außenzahnrad (40, 40A, 40B) enthaltenen Außenzähne (45) durch exzentrische Oszillation des Außenzahnrads (40, 40A, 40B) über eine Innenperipheriekante (66) des Abstandshalters (60, 60A, 60B) hinausbewegen.

7. Der Drehzahlminderer (10) nach einem der Ansprüche 1 bis 6, wobei das Außenzahnrad (40, 40A, 40B) mit einem Säulendurchgangsloch (43) versehen ist, durch das ein Säulenabschnitt (32b) des Trägers (30) hindurchgeht, und
wobei sich eine äußerste Position des Säulendurchgangslochs (43) in radialer Richtung (D2) durch exzentrische Oszillation des Außenzahnrads (40, 40A, 40B) über eine Innenperipheriekante (66) des Abstandhalters (60, 60A, 60B) hinausbewegt, und/oder
wobei eine Innenperipheriekante (66) des Abstandshalters (60, 60A, 60B) so konfiguriert ist, dass sie immer auf einer Außenseite von einer äußersten Position des Säulendurchgangslochs (43) in radialer Richtung (D2) angeordnet ist.

8. Der Drehzahlminderer (10) nach einem der Ansprüche 1 bis 7, wobei der Abstandshalter (60, 60A, 60B) den Träger (30) in einem ringförmigen Bereich kontaktiert.

9. Der Drehzahlminderer (10) nach einem der Ansprüche 1 bis 8, wobei das Gehäuse (20) den Träger (30) drehbar lagert,
wobei ein Mittelpunkt (C60) einer Außenperipheriekante (67) des Abstandshalters (60, 60A, 60B) auf einer Achse (RA) der relativen Drehung zwischen dem Träger (30) und dem Gehäuse (20) angeordnet ist.

10. Der Drehzahlminderer (10) nach einem der Ansprüche 1 bis 9, wobei das Gehäuse (20) den Träger (30) drehbar lagert und
wobei der Abstandshalter (60, 60A, 60B) um eine Achse (RA) der relativen Drehung zwischen dem Träger (30) und dem Gehäuse (20) drehbar ist.

11. Der Drehzahlminderer (10) nach einem der Ansprüche 1 bis 10, wobei das Außenzahnrad (40, 40A, 40B) ein erstes Außenzahnrad (40A) und ein zweites Außenzahnrad (40B) enthält,
wobei ein Zwischenabstandhalter (60C) zwischen dem ersten Außenzahnrad (40A) und dem zweiten Außenzahnrad (40B) vorgesehen ist, und
wobei eine Dicke (TC) des Zwischenabstandhalters (60C) größer oder gleich einer Dicke (TA, TB) des ringförmigen Abstandhalters (60A, 60B) ist.

12. Der Drehzahlminderer (10) nach einem der Ansprüche 1 bis 10, wobei der Träger (30) einen ersten Trägerabschnitt (31a) und einen zweiten Trägerabschnitt (31b) aufweist, die in einer axialen Richtung (D1) angeordnet sind,
wobei das Außenzahnrad (40) ein erstes Außenzahnrad (40A) und ein zweites Außenzahnrad (40B) enthält, die zwischen dem ersten Trägerabschnitt (31a) und dem zweiten Trägerabschnitt (31b) in axialer Richtung (D1) angeordnet sind, und
wobei der Abstandhalter (60) einen ersten Abstandhalter (60A), der zwischen dem ersten Trägerabschnitt (31a) und dem ersten Außenzahnrad (40A) angeordnet ist, und einen zweiten Abstandhalter (60B) enthält, der zwischen dem zweiten Außenzahnrad (40B) und dem zweiten Trägerabschnitt (31b) angeordnet ist.

13. Der Drehzahlminderer (10) nach Anspruch 12, der ferner einen ringförmigen Zwischenabstandshalter (60C) umfasst, der zwischen dem ersten Außenzahnrad (40A) und dem zweiten Außenzahnrad (40B) angeordnet ist, wobei sich der Zwischenabstandshalter (60C) dreht, während er das erste Außenzahnrad (40A) und das zweite Außenzahnrad (40B) kontaktiert.

## Revendications

1. Réducteur de vitesse (10) comprenant
un support (30) ;
un arbre (50) supporté en rotation par le support (30) ;
un engrenage externe (40, 40A, 40B) supporté par l'arbre (50), l'engrenage externe (40, 40A, 40B) oscillant de manière excentrique par rapport au support (30) par la rotation de l'arbre (50) ; et
un carter (20) ayant des dents internes (25) qui s'engrènent avec des dents externes (45) de l'engrenage externe (40, 40A, 40B) oscillant de manière excentrique,
**caractérisé en ce que** le réducteur de vitesse (10) comprend en outre
une entretoise annulaire (60, 60A, 60B) disposée entre l'engrenage externe (40, 40A, 40B) et le support (30), l'entretoise (60, 60A, 60B) tournant tout en étant en contact avec l'engrenage externe (40, 40A, 40B) et le support (30),
dans lequel l'entretoise (60, 60A, 60B) tourne tout en étant en contact avec les dents internes (25) depuis un côté intérieur dans une direction radiale (D2).

2. Réducteur de vitesse (10) selon la revendication 1, dans lequel l'entretoise (60, 60A, 60B) est en contact avec l'engrenage externe (40, 40A, 40B) dans une région annulaire.

3. Réducteur de vitesse (10) selon la revendication 1 ou 2, dans lequel les pointes de dents (46) des dents externes (45) incluses dans l'engrenage externe (40, 40A, 40B) se déplacent au-delà d'un bord périphérique extérieur (67) de l'entretoise (60, 60A, 60B) par l'oscillation excentrique de l'engrenage externe (40, 40A, 40B).

4. Réducteur de vitesse (10) selon l'une quelconque des revendications 1 à 3, dans lequel les pointes de dents (46) de toutes les dents externes (45) incluses dans l'engrenage externe (40, 40A, 40B) sont situées du côté extérieur d'un bord périphérique intérieur (66) de l'entretoise (60, 60A, 60B) dans la direction radiale (D2).

5. Réducteur de vitesse (10) selon l'une quelconque des revendications 1 à 4, dans lequel les parties inférieures de dents (47) de toutes les dents externes (45) incluses dans l'engrenage externe (40, 40A, 40B) sont situées sur le côté extérieur d'un bord périphérique intérieur (66) de l'entretoise (60) dans la direction radiale (D2).

6. Réducteur de vitesse (10) selon l'une quelconque des revendications 1 à 5, dans lequel les parties inférieures de dents (47) des dents externes (45) incluses dans l'engrenage externe (40, 40A, 40B) se déplacent au-delà d'un bord périphérique intérieur (66) de l'entretoise (60, 60A, 60B) par l'oscillation excentrique de l'engrenage externe (40, 40A, 40B).

7. Réducteur de vitesse (10) selon l'une quelconque des revendications 1 à 6, dans lequel l'engrenage externe (40, 40A, 40B) est pourvu d'un trou traversant de colonne (43) à travers lequel passe une partie de colonne (32b) du support (30), et
dans lequel la position la plus externe du trou traversant de colonne (43) dans la direction radiale (D2) se déplace au-delà d'un bord périphérique intérieur (66) de l'entretoise (60, 60A, 60B) par l'oscillation excentrique de l'engrenage externe (40, 40A, 40B), et/ou
dans lequel le bord périphérique intérieur (66) de l'entretoise (60, 60A, 60B) est configuré pour être toujours situé sur un côté extérieur par rapport à la position la plus externe du trou traversant de colonne (43) dans la direction radiale (D2).

8. Réducteur de vitesse (10) selon l'une quelconque des revendications 1 à 7, dans lequel l'entretoise (60, 60A, 60B) est en contact avec le support (30) dans une région annulaire.

9. Réducteur de vitesse (10) selon l'une quelconque des revendications 1 à 8, dans lequel le carter (20) supporte en rotation le support (30),
dans lequel un centre (C60) d'un bord périphérique extérieur (67) de l'entretoise (60, 60A, 60B) est situé sur un axe (RA) de rotation relative entre le support (30) et le carter (20).

10. Réducteur de vitesse (10) selon l'une quelconque des revendications 1 à 9, dans lequel le carter (20) supporte en rotation le support (30), et
dans lequel l'entretoise (60, 60A, 60B) peut tourner autour d'un axe (RA) de rotation relative entre le support (30) et le carter (20).

11. Réducteur de vitesse (10) selon l'une quelconque des revendications 1 à 10, dans lequel l'engrenage externe (40, 40A, 40B) comprend un premier engrenage externe (40A) et un second engrenage externe (40B),
dans lequel une entretoise intermédiaire (60C) est prévue entre le premier engrenage externe (40A) et le second engrenage externe (40B), et
dans lequel une épaisseur (TC) de l'entretoise intermédiaire (60C) est supérieure ou égale à une épaisseur (TA, TB) de l'entretoise annulaire (60A, 60B).

12. Réducteur de vitesse (10) selon l'une quelconque des revendications 1 à 10, dans lequel le support (30) a une première partie de support (31a) et une seconde partie de support (31b) agencées dans une direction axiale (D1),
dans lequel l'engrenage externe (40) comprend un premier engrenage externe (40A) et un second engrenage externe (40B) disposés entre la première partie de support (31a) et la seconde partie de support (31b) dans la direction axiale (D1), et
dans lequel l'entretoise (60) comprend une première entretoise (60A) disposée entre la première partie de support (31a) et le premier engrenage externe (40A) et une seconde entretoise (60B) disposée entre le second engrenage externe (40B) et la seconde partie de support (31b).

13. Réducteur de vitesse (10) selon la revendication 12, comprenant en outre une entretoise annulaire intermédiaire (60C) disposée entre le premier engrenage externe (40A) et le second engrenage externe (40B), l'entretoise intermédiaire (60C) tournant tout en étant en contact avec le premier engrenage externe (40A) et le second engrenage externe (40B).
